(19)

Europäisches Patentamt

European Patent Office

Office européen des brevets

(11) **EP 4 032 629 A1**

(12) **EUROPÄISCHE PATENTANMELDUNG**

(43) Veröffentlichungstag:
    **27.07.2022   Patentblatt 2022/30**

(21) Anmeldenummer: **21153138.9**

(22) Anmeldetag: **25.01.2021**

(51) Internationale Patentklassifikation (IPC):
    **B21B 38/02** (2006.01)   **G01B 7/34** (2006.01)

(52) Gemeinsame Patentklassifikation (CPC):
    **B21B 38/02; G01B 21/08;** B21B 2001/225;
    B21B 2003/001; B21B 2015/0021

(84) Benannte Vertragsstaaten:
    **AL AT BE BG CH CY CZ DE DK EE ES FI FR GB
    GR HR HU IE IS IT LI LT LU LV MC MK MT NL NO
    PL PT RO RS SE SI SK SM TR**
    Benannte Erstreckungsstaaten:
    **BA ME**
    Benannte Validierungsstaaten:
    **KH MA MD TN**

(71) Anmelder: **Primetals Technologies Germany
    GmbH
    91058 Erlangen (DE)**

(72) Erfinder: **Blanco de Souza, Jose Claudio
    91056 Erlangen (DE)**

(74) Vertreter: **Metals@Linz
    Primetals Technologies Austria GmbH
    Intellectual Property Upstream IP UP
    Turmstraße 44
    4031 Linz (AT)**

(54) **PLANHEITSMESSUNG BEI WALZSTRASSEN FÜR ALUMINIUM**

(57)     Einem Walzgerüst (2) zum Walzen eines heißen Aluminiumbandes (1) sind auslaufseitig - in dieser Reihenfolge - eine Trimmeinrichtung (7), eine vordere Umlenkrolle (8), eine Messanordnung (9) und eine Haspeleinrichtung (10) nachgeordnet. Die Haspeleinrichtung (10) weist einen Haspel (11) und eine hintere Umlenkrolle (12) auf, wobei die hintere Umlenkrolle (12) dem Haspel (11) vorgeordnet ist. Die Trimmeinrichtung (7) trennt auf beiden Seiten des Metallbandes (1) jeweils einen Streifen des Metallbandes (1) ab, so dass den nachgeordneten Einrichtungen (8 bis 10) nur der verbleibende Mittelbereich des Metallbandes (1) zugeführt wird. Die vordere Umlenkrolle (8) lenkt das Metallband (1) aus einer direkten Verbindungslinie (13) zwischen dem Walzgerüst (2) und der hinteren Umlenkrolle (12) aus. Die Messanordnung weist eine mechanische Anregungseinrichtung und eine Messeinrichtung auf. Die mechanische Anregungseinrichtung regt das Metallband (1) in seiner Dickenrichtung zu einer mechanischen Schwingung an. Die Messeinrichtung erfasst für mehrere in Breitenrichtung des Metallbandes (1) nebeneinanderliegende Bereiche des Metallbandes (1) die Amplitude der angeregten mechanischen Schwingung des jeweiligen Bereichs.

FIG 1

EP 4 032 629 A1

**Beschreibung**

Gebiet der Technik

Die vorliegende Erfindung geht aus von einer Walzeinrichtung für ein Metallband,

- wobei die Walzeinrichtung ein Walzgerüst aufweist,
- wobei die Walzeinrichtung eine auslaufseitig des Walzgerüsts angeordnete Haspeleinrichtung mit einem Haspel und einer hinteren Umlenkrolle aufweist,
- wobei die hintere Umlenkrolle zwischen dem Walzgerüst und dem Haspel angeordnet ist,
- wobei die Walzeinrichtung eine zwischen dem Walzgerüst und der hinteren Umlenkrolle angeordnete Messanordnung aufweist,
- wobei die Messanordnung eine mechanische Anregungseinrichtung aufweist, mittels derer das Metallband in seiner Dickenrichtung zu einer mechanischen Schwingung anregbar ist,
- wobei die Messanordnung eine Messeinrichtung aufweist, mittels derer für mehrere in Breitenrichtung des Metallbandes nebeneinanderliegende Bereiche des Metallbandes die Amplitude der angeregten mechanischen Schwingung des jeweiligen Bereichs des Metallbandes erfassbar ist.

Stand der Technik

Eine derartige Walzeinrichtung ist für Walzstraßen zum Kaltwalzen von Stahl bekannt. Rein beispielhaft kann auf die WO 98/38482 A1 verwiesen werden. Aus den erfassten Amplituden der mechanischen Schwingungen der Bereiche des Metallbandes kann die Planheit des Metallbandes ermittelt werden. Auch dies ist in der genannten WO-Schrift näher erläutert.

Zusammenfassung der Erfindung

Beim Walzen von Metallbändern ist die Planheit des gewalzten Metallbandes ein wichtiges Qualitätsmerkmal. Insbesondere muss vermieden werden, dass das gewalzte Metallband nach dem Walzen wellig wird. Diese Problematik stellt sich gleichermaßen beim Kaltwalzen vom Stahl und beim Warmwalzen von Aluminium. Während jedoch beim Kaltwalzen von Stahl die obengenannte Ausgestaltung einer Walzeinrichtung bekannt ist, kann eine derartige Walzeinrichtung nicht ohne weiteres auch beim Warmwalzen von Aluminium verwendet werden. Dies hat verschiedene Gründe.
Ein Grund besteht darin, dass ein Aluminiumband andere physikalische Eigenschaften aufweist und damit bei gleicher Geometrie der Walzeinrichtung ein anderes Schwingungsverhalten - beispielsweise andere Eigenfrequenzen - aufweist als ein Stahlband. Insbesondere liegen die Eigenfrequenzen bei einem Aluminiumband erheblich niedriger als bei einem Stahlband. Um Störungen durch Eigenschwingungen des Aluminiumbandes zu vermeiden, müsste die Frequenz der angeregten mechanischen Schwingung bei einem Aluminiumband deutlich niedriger gewählt werden als bei einem Stahlband. Diese theoretische Möglichkeit, mit einer geringeren Frequenz zu arbeiten, erweist sich aus praktischen Erwägungen als nicht sinnvoll.
Ein weiterer Grund besteht darin, dass nach dem Warmwalzen eines Aluminiumbandes eine Trimmung der Seitenkanten des Aluminiumbandes erforderlich ist. Zu diesem Zweck ist bei einer Walzeinrichtung zum Warmwalzen eines Aluminiumbandes auslaufseitig des Walzgerüsts eine Trimmeinrichtung angeordnet, mittels derer auf beiden Seiten des Aluminiumbandes jeweils ein Streifen des Metallbandes abgetrennt wird. Durch den mit der Trimmung verbundenen Schneidvorgang werden jedoch zumindest die Randbereiche des Aluminiumbandes zu mechanischen Schwingungen angeregt. Diese Schwingungen stören zumindest in den Randbereichen des Aluminiumbandes die korrekte Erfassung der Amplituden der angeregten mechanischen Schwingung und verfälschen daher das Ergebnis.
Zur Erfassung der Planheit eines Aluminiumbandes erfolgt daher eine kontaktbehaftete Erfassung mittels einer segmentierten Zugmessrolle. Diese Lösung weist verschiedene Nachteile auf. So besteht beispielsweise die Gefahr, die Oberfläche des Aluminiumbandes zu zerkratzen oder anderweitig zu beschädigen. Weiterhin ist die Messung relativ ungenau. Auch ist die Verwendung einer segmentierten Zugmessrolle kostenintensiv. Schließlich besteht die Gefahr einer Beschädigung der Sensoren der segmentierten Zugmessrolle.
Die Aufgabe der vorliegenden Erfindung besteht darin, Möglichkeiten zu schaffen, mittels derer eine Walzeinrichtung der eingangs genannten Art derart modifiziert werden kann, dass sie bei einer Walzeinrichtung für ein heißes Aluminiumband einsetzbar ist.
Die Aufgabe wird durch eine Walzeinrichtung mit den Merkmalen des Anspruchs 1 gelöst. Vorteilhafte Ausgestaltungen der Walzeinrichtung sind Gegenstand der abhängigen Ansprüche 2 bis 12.
Erfindungsgemäß wird eine Walzeinrichtung der eingangs genannten Art dadurch ausgestaltet,

- dass die Walzeinrichtung eine auslaufseitig des Walzgerüsts angeordnete Trimmeinrichtung aufweist, mittels derer auf beiden Seiten des Metallbandes jeweils ein Streifen des Metallbandes abtrennbar ist, so dass nur ein verbleibender Mittelbereich des Metallbandes der hinteren Umlenkrolle und von dort dem Haspel zugeführt wird, und
- dass die Walzeinrichtung eine zwischen der Trimmeinrichtung und der Messanordnung angeordnete vordere Umlenkrolle aufweist, mittels derer das Metallband aus einer direkten Verbindungslinie zwischen dem Walzgerüst und der hinteren Umlenkrolle auslenkbar ist.

Aufgrund der Trimmeinrichtung muss es sich bei der Walzeinrichtung um eine Walzeinrichtung zum Walzen eines Aluminiumbandes handeln. Denn bei anderen Metallen - insbesondere bei Stahl - sind derartige Trimmeinrichtungen weder erforderlich noch vorhanden. Mittels der vorderen Umlenkrolle wird das Metallband von einer Auslaufrichtung, mit der das Metallband aus dem Walzgerüst ausläuft, in die Transportrichtung umgelenkt, mit welcher das Metallband die Messanordnung passiert. Das Umlenken als solches - also die Richtungsänderung als solche - ist von untergeordneter Bedeutung. Insbesondere kann das Ausmaß, zu dem das Metallband 1 mittels der vorderen Umlenkrolle 8 umgelenkt wird, relativ gering sein. Es reicht eine Umlenkung um wenige Grad aus, beispielsweise eine Umlenkung um 5° bis 10°. Auch eine größere Umlenkung ist aber ohne weiteres möglich. Durch das Umlenken an der vorderen Umlenkrolle werden jedoch zwei entscheidende Effekte erreicht. Zum einen wird die freie Wegstrecke verkürzt, auf der das Aluminiumband schwingen kann. Denn die freie Wegstrecke erstreckt sich aufgrund der vorderen Umlenkrolle nicht mehr von dem Walzgerüst bzw. der Trimmeinrichtung zur hinteren Umlenkrolle, sondern nur noch von der vorderen Umlenkrolle zur hinteren Umlenkrolle. Dadurch erhöhen sich die Eigenfrequenzen des Aluminiumbandes im Bereich der Messanordnung. Weiterhin werden durch die vordere Umlenkrolle die Schwingungen beruhigt, die durch die Trimmeinrichtung in dem Aluminiumband angeregt werden. Die durch die Trimmeinrichtung hervorgerufenen Störungen werden also beseitigt bzw. zumindest weitgehend gedämpft.

Die mechanische Anregungseinrichtung kann insbesondere als Saugeinrichtung ausgebildet sein, mittels derer das Metallband einseitig periodisch mit einem Unterdruck beaufschlagbar ist. Diese Ausgestaltung ist etabliert, robust und zuverlässig. Die mittlere Amplitude der durch den Unterdruck angeregten mechanischen Schwingungen kann durch das Ausmaß eingestellt werden, mit dem eine Luftabsaugung variiert wird. Die Frequenz der angeregten mechanischen Schwingungen kann durch die Frequenz eingestellt werden, mit der die Luftabsaugung variiert wird.

Die Messeinrichtung kann insbesondere als kontaktlos arbeitende Messeinrichtung ausgebildet sein, mittels derer die Amplitude der angeregten mechanischen Schwingung des jeweiligen Bereichs des Metallbandes kontaktlos erfassbar ist. Analog zur Ausgestaltung der mechanischen Anregungseinrichtung ist auch diese Ausgestaltung etabliert, robust und zuverlässig.

Eine kontaktlos arbeitende Messeinrichtung kann beispielsweise zum Induzieren von Wirbelströmen in dem Metallband eine Anzahl von elektromagnetischen Anregungseinrichtungen aufweisen und für die Erfassung der Amplitude der mechanischen Schwingung des jeweiligen Bereichs des Metallbandes jeweils mindestens eine elektromagnetische Empfangseinrichtung aufweisen, mittels derer die Stärke des im jeweiligen Bereich des Metallbandes angeregten Wirbelstroms erfassbar ist.

Insbesondere wird eine Messanordnung, in der die mechanische Anregungseinrichtung und die Messeinrichtung angeordnet sind, in verschiedenen, von der Siemens VAI Metals Technologies GmbH, Linz, Österreich, entsprechend ausgerüsteten Walzwerken eingesetzt. Der damalige Produktname der Siemens VAI Metals Technologies GmbH für die Messanordnung war SIFLAT. Auch in der eingangs genannten WO-Schrift ist eine derartige Messanordnung erläutert.

Vorzugsweise ist die vordere Umlenkrolle im wesentlichen orthogonal zu der Verbindungslinie des Walzgerüsts und der hinteren Umlenkrolle in Dickenrichtung des Metallbandes bewegbar. Das Ausmaß der Bewegung ist vorzugsweise derart, dass die vordere Umlenkrolle in einer zurückgezogenen Position das Metallband nicht aus der Verbindungslinie des Walzspaltes und der hinteren Umlenkrolle auslenkt, sehr wohl aber in einer ausgefahrenen Position. Durch diese Ausgestaltung kann insbesondere erreicht werden, dass zunächst ein sauberes Anhaspeln "ohne Störungen durch die vordere Umlenkrolle und die Messanordnung" möglich ist und erst nach dem Anhaspeln, also erst nach dem Erreichen eines stabilen Zustands, die vordere Umlenkrolle an das Metallband angestellt wird und es auslenkt.

Vorzugsweise ist die vordere Umlenkrolle von oben an das Metallband anstellbar. Insbesondere muss in diesem Fall die vordere Umlenkrolle nicht in dem beengten Bauraum zwischen dem Walzgerüst und der hinteren Umlenkrolle angeordnet werden. Weiterhin ist diese Ausgestaltung leichter bei einer bereits existierenden, noch nicht erfindungsgemäß ausgestalteten Walzeinrichtung nachrüstbar.

Es ist möglich, dass die vordere Umlenkrolle mit der Messanordnung mechanisch verbunden ist, so dass die vordere Umlenkrolle und die Messanordnung nur gemeinsam bewegbar sind. Diese Ausgestaltung ist insbesondere dann sinnvoll, wenn die vordere Umlenkrolle und die Messanordnung sich auf derselben Seite des Metallbandes befinden. Dies kann die mechanische Konstruktion vereinfachen und weniger Aktuatoren erfordern. Dies gilt ganz besonders in dem Fall, dass die vordere Umlenkrolle mit der Messanordnung über einen schwenkbar gelagerten Hebelarm verbunden ist, so dass bei an das Metallband angestellter vorderer Umlenkrolle beim Schwenken des Hebelarms ein Abstand der Messanordnung vom Metallband (bzw. von einer Verbindungslinie der vorderen und der hinteren Umlenkrolle miteinander) konstant bleibt.

Es ist weiterhin möglich, dass zwischen der Messanordnung und der hinteren Umlenkrolle eine mittlere Umlenkrolle angeordnet ist. Durch diese Ausgestaltung kann die freie Wegstrecke im Bereich der Messanordnung, welche die Eigenfrequenzen des Metallbandes bestimmt, noch weiter verkürzt werden.

Vorzugsweise ist die mittlere Umlenkrolle mit der Messanordnung mechanisch verbunden, so dass die Messanordnung und die mittlere Umlenkrolle nur gemeinsam bewegbar sind. Dadurch kann - insbesondere dann, wenn zusätzlich auch die die vordere Umlenkrolle mit der Messanordnung mechanisch verbunden ist, - beim Heranfahren der Einheit von Messanordnung, vorderer Umlenkrolle und mittlerer Umlenkrolle an das Metallband automatisch gewährleistet werden, dass die mechanische Anregungseinrichtung und die Messeinrichtung in den gewünschten Abständen vom Metallband angeordnet werden.

Vorzugsweise ist die Messeinrichtung wassergekühlt. Dadurch ist es insbesondere möglich, die Messeinrichtung hinreichend zu kühlen und damit mittels der Messeinrichtung auch bei einem sehr heißen Aluminiumband eine Planheitsmessung durchzuführen.

Vorzugsweise ist ein Abstand der Messeinrichtung vom Metallband zwischen einem minimalen Abstand und einem maximalen Abstand einstellbar. Dadurch kann insbesondere bei Bedarf der Abstand der Messeinrichtung vom Metallband vergrößert werden. Ein derartiger Bedarf kann sich beispielsweise dadurch ergeben, dass eine Wasserkühlung ausfällt.

Vorzugsweise sind die Wasserkühlung, der minimale Abstand und der maximale Abstand derart aufeinander abgestimmt, dass die Messeinrichtung bei dem minimalen Abstand mit Wasserkühlung dauerhaft betreibbar ist und bei dem maximalen Abstand auch ohne Wasserkühlung dauerhaft betreibbar ist oder zumindest trotz der thermischen Einwirkung des heißen Metallbandes auf die Messeinrichtung nicht beschädigt wird.

Kurze Beschreibung der Zeichnungen

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:

FIG 1    eine Seitenansicht einer Walzeinrichtung,
FIG 2    die Walzeinrichtung von FIG 1 von oben,
FIG 3    eine Messanordnung und zwei Umlenkrollen von der Seite,
FIG 4    die Messanordnung von FIG 3 von oben,
FIG 5    eine Seitenansicht einer Walzeinrichtung,
FIG 6    eine Seitenansicht einer Walzeinrichtung und
FIG 7    eine weitere Messanordnung und zwei Umlenkrollen.

Beschreibung der Ausführungsformen

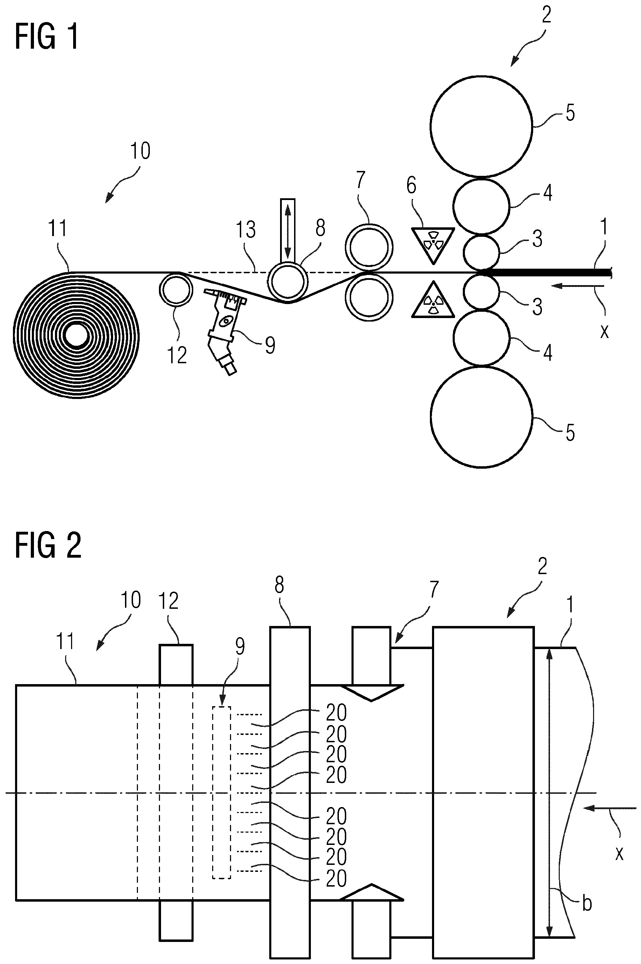

Gemäß den FIG 1 und 2 weist eine Walzeinrichtung für ein Metallband 1 ein Walzgerüst 2 auf. Das Walzgerüst 2 ist in FIG 1 als Sextogerüst dargestellt, also als Walzgerüst, das zusätzlich zu seinen Arbeitswalzen 3 Zwischenwalzen 4 und Stützwalzen 5 aufweist. Das Walzgerüst 2 könnte jedoch auch anders ausgebildet sein, beispielsweise als Quartogerüst, bei dem zusätzlich zu den Arbeitswalzen 3 nur die Stützwalzen 5 vorhanden sind. In diesem Fall würden die Stützwalzen 5 selbstverständlich direkt auf den Arbeitswalzen 3 aufliegen. Auch andere Ausgestaltungen sind möglich, beispielsweise als 20-Rollen-Walzgerüst oder als 12-Rollen-Walzgerüst.

Das Metallband 1 ist ein heißes Aluminiumband. Es weist eine Breite b von meist 100 cm oder mehr (teilweise bis 225 cm und noch mehr) und eine Temperatur im Bereich von über 300 °C auf, meist zwischen 315 °C und 350 °C. Das Metallband 1 wird dem Walzgerüst 2 in einer Förderrichtung x zugeführt. Es läuft in aller Regel auch mit derselben Förderrichtung x aus dem Walzgerüst 2 aus. Die Förderrichtung x ist in aller Regel horizontal oder zumindest nahezu horizontal. Eine Transportgeschwindigkeit, mit welcher das Metallband 1 aus dem Walzgerüst 2 ausläuft, kann bis zu 400 m/min liegen, manchmal sogar noch etwas darüber.

Auslaufseitig des Walzgerüsts 2 sind - in dieser Reihenfolge - eine Dickenmesseinrichtung 6, eine Trimmeinrichtung 7, eine vordere Umlenkrolle 8, eine Messanordnung 9 und eine Haspeleinrichtung 10 angeordnet. Die Haspeleinrichtung 10 weist einen Haspel 11 und eine hintere Umlenkrolle 12 auf, wobei die hintere Umlenkrolle 12 zwischen dem Walzgerüst 2 und dem Haspel 11 angeordnet ist, genauer zwischen der Messanordnung 9 und dem Haspel 11.

Dem Walzgerüst 2 kann einlaufseitig ein weiteres Walzgerüst vorgeordnet sein. Auch können dem Walzgerüst 2 einlaufseitig mehrere weitere Walzgerüste vorgeordnet sein. Ebenso ist es möglich, dass dem Walzgerüst 2 beispielsweise direkt eine Haspeleinrichtung zum Abhaspeln des Metallbandes 1 vorgeordnet ist. Welche dieser Ausgestaltungen gegeben ist, ist im Rahmen der vorliegenden Erfindung von untergeordneter Bedeutung. Aus diesem Grund ist die Ausgestaltung der Walzeinrichtung einlaufseitig des Walzgerüsts 2 in den FIG nicht dargestellt und wird auch nicht näher erläutert.

Nach dem Auslaufen aus dem Walzgerüst 2 wird zunächst mittels der Dickenmesseinrichtung 6 (gegebenenfalls über die Bandbreite ortsaufgelöst) die Dicke des Metallbandes 1 erfasst. Die Dickenerfassung ist im Rahmen der vorliegenden Erfindung von untergeordneter Bedeutung. Aus diesem Grund ist die Dickenmesseinrichtung 6 in FIG 2 nicht mit dargestellt. Aus dem gleichen Grund wird auch die Auswertung der erfassten Dicke nicht näher erläutert.

Sodann wird mittels der Trimmeinrichtung 7 auf beiden Seiten des Metallbandes 1 jeweils ein Streifen des Metallbandes 1 abgetrennt. Den nachfolgenden Elementen, also der vorderen Umlenkrolle 8, der Messanordnung 9, der hinteren Umlenkrolle 12 und dem Haspel 11 wird somit nur ein verbleibender Mittelbereich des Metallbandes 1 zugeführt. Die abgetrennten Streifen sind in FIG 2 im Verhältnis zum Mittelbereich breiter dargestellt als sie in der Realität sind. In der Realität weisen sie in der Regel eine relativ geringe Breite auf, typisch zwischen 1,5 cm und 4,0 cm.

Mittels der beiden Umlenkrollen 8, 12 wird die Richtung, in der das Metallband 1 transportiert wird, jeweils geändert. Insbesondere wird das Metallband 1 mittels der vorderen Umlenkrolle 8 aus einer direkten Verbindungslinie 13 zwischen dem Walzgerüst 2 (genauer: dem Walzspalt des Walzgerüsts 2) und der hinteren Umlenkrolle 12 ausgelenkt.

Gemäß den FIG 1 und 2 ist die vordere Umlenkrolle 8 von oben an das Metallband 1 anstellbar. Diese Ausgestaltung ist insbesondere dann von Vorteil, wenn die vordere Umlenkrolle 8 bei einer bereits existierenden Walzeinrichtung - also einer Walzeinrichtung, welche die vordere Umlenkrolle 8 noch nicht aufweist - nachgerüstet werden soll.

Unabhängig davon, ob die vordere Umlenkrolle 8 von oben oder von unten an das Metallband 1 anstellbar ist, ist die vordere Umlenkrolle 8 jedoch orthogonal oder zumindest im wesentlichen orthogonal zu der genannten Verbindungslinie 13 bewegbar und damit in Dickenrichtung des Metallbandes 1. Dies ist in FIG 1 durch einen Doppelpfeil oberhalb der oberen Umlenkrolle 8 angedeutet. Weiterhin kann das Anstellen der vorderen Umlenkrolle 8 an das Metallband 1 nach Bedarf gesteuert (also ungeregelt) oder geregelt erfolgen. Der Antrieb zum Anstellen der vorderen Umlenkrolle 8 kann nach Bedarf beispielsweise elektrischer, hydraulischer oder pneumatischer Natur sein.

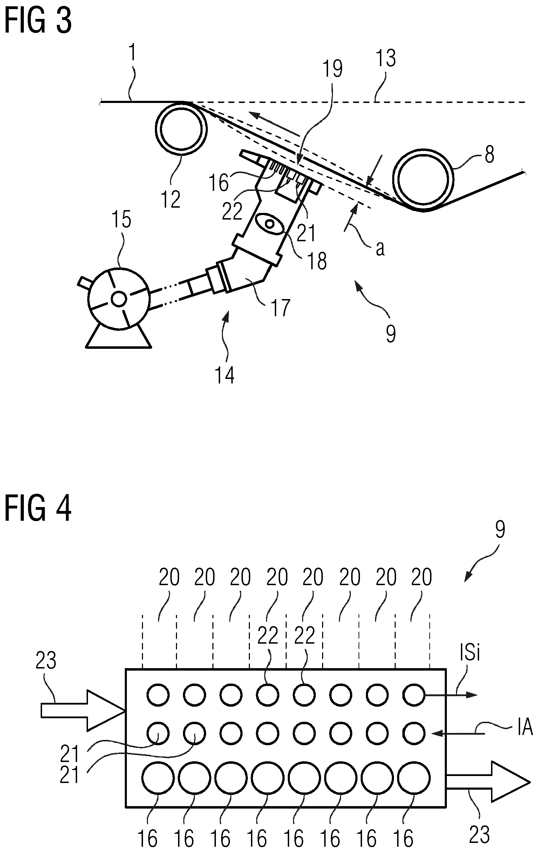

Nachfolgend werden in Verbindung mit den FIG 3 und 4 der Aufbau und die Wirkungsweise der Messanordnung 9 näher erläutert.

Gemäß FIG 3 weist die Messanordnung 9 eine mechanische Anregungseinrichtung 14 auf. Mittels der mechanischen Anregungseinrichtung 14 kann das Metallband 1 in seiner Dickenrichtung zu einer mechanischen Schwingung angeregt werden. Konkret ist das Metallband 1 in FIG 3 in einer durchgezogene Linie in einer mittleren Stellung eingezeichnet, in gestrichelten Linien in den vollständig ausgelenkten Stellungen. Die mechanische Anregungseinrichtung 14 kann beispielsweise entsprechend der Darstellung in FIG 3 als Saugeinrichtung ausgebildet sein. Beispielsweise kann ein Sauggebläse 15 über Saugöffnungen 16 (siehe auch FIG 4) und einen Saugkanal 17 aus dem Bereich zwischen dem Metallband 1 und der Messanordnung 9 Luft absaugen und damit das Metallband 1 einseitig periodisch mit einem Unterdruck beaufschlagen. Das Ausmaß, in dem Luft abgesaugt wird, kann durch direkte Ansteuerung des Sauggebläses 15 und/oder durch Ansteuerung eines Modulatorelements 18 variiert werden. Im Falle der Ansteuerung des Modulatorelements 18 variiert das Modulatorelement 18 in periodischer Weise den Querschnitt und damit den Strömungswiderstand des Saugkanals 17. Das Modulatorelement 18 kann beispielsweise als ovales oder elliptisches Element ausgebildet sein, das im Saugkanal 17 rotiert wird.

Die Frequenz, mit der das Metallband 1 mechanisch schwingt, wird durch die Frequenz bestimmt, mit der die Anregungseinrichtung 14 das Metallband 1 zu der mechanischen Schwingung anregt. In der Regel liegt die Frequenz im oberen einstelligen oder niedrigen zweistelligen Hertzbereich, also zwischen 5 Hz und 30 Hz. Meist liegt sie zwischen 8 Hz und 20 Hz, insbesondere zwischen 10 Hz und 15 Hz. Die Amplitude der mechanischen Schwingung des Metallbandes 1 kann durch das Ausmaß der Luftabsaugung eingestellt werden. Meist wird die Luftabsaugung derart eingestellt, dass die Amplitude der mechanischen Schwingung des Metallbandes 1 im Bereich zwischen 50 $\mu$m und 200 $\mu$m liegt, insbesondere zwischen 80 $\mu$m und 125 $\mu$m.

Die Messanordnung 9 weist weiterhin eine Messeinrichtung 19 auf, mittels derer für mehrere Bereiche 20 des Metallbandes 1 (siehe die FIG 2 und 4) die jeweilige Amplitude $A_i$ (mit $i = 1, 2, ... n$ und $n$ = Anzahl an Bereichen 20) der angeregten mechanischen Schwingung des jeweiligen Bereichs 20 des Metallbandes 1 erfasst werden kann. Die Bereiche 20 liegen entsprechend der Darstellung in den FIG 2 und 4 in Breitenrichtung des Metallbandes 1 gesehen nebeneinander. Die dargestellte Anzahl an insgesamt acht Bereichen 20 ist nur rein beispielhaft zu verstehen.

Aus den ermittelten Amplituden $A_i$ kann in an sich bekannter Art und Weise die Planheit des Metallbandes 1 ermittelt werden. Nachfolgend wird mit $KW_i$ der Kehrwert der jeweiligen Amplitude $A_i$ des jeweiligen Bereichs 20 bezeichnet. Es gilt also für alle Bereiche 20 die Beziehung

$$KWi = \frac{1}{Ai} \qquad\qquad (1)$$

Weiterhin wird mit KW (also ohne den Index i) der Mittelwert der Kehrwerte KWi bezeichnet:

$$KW = \frac{1}{n} \sum_i KWi \qquad (2)$$

Somit kann anhand der Beziehung

$$\delta\sigma i = \sigma i \left( \frac{KWi - KW}{KW} \right) \qquad (3)$$

für den i-ten Bereich 20 die Abweichung δσi der spezifischen Spannung σi ermittelt werden. Die spezifische Spannung σi für den i-ten Bereich 20 ergibt sich als Mittelwert der für die einzelnen Bereiche 20 ermittelten spezifischen Spannungen σi, gegebenenfalls gewichtet mit den Dicken der jeweiligen Bereiche 20. Aus den Abweichungen δσi der spezifischen Spannung σi kann sodann in an sich bekannter Art und Weise die Planheit ermittelt werden.

Die Auswertung der ermittelten Amplituden Ai bzw. die Ermittlung der Planheit des Metallbandes 1 ist als solche nicht Gegenstand der vorliegenden Erfindung. Gegenstand der vorliegenden Erfindung ist vielmehr die Ausgestaltung der Walzeinrichtung, welche die Erfassung der Messwerte ermöglicht, anhand derer die Amplituden Ai ermittelt werden können.

Die Messeinrichtung 19 kann insbesondere als kontaktlos arbeitende Messeinrichtung ausgebildet sein, also als Messeinrichtung 19, mittels derer die Amplituden Ai der angeregten mechanischen Schwingung der Bereiche 20 des Metallbandes 1 kontaktlos erfassbar sind. Beispielsweise kann die Messeinrichtung 19 eine Anzahl von elektromagnetischen Anregungseinrichtungen 21 aufweisen, mittels derer in dem Metallband 1 Wirbelströme induziert werden. Im Einzelfall ist es möglich, dass nur eine einzige elektromagnetische Anregungseinrichtung 20 vorhanden ist. Manchmal können mehrere elektromagnetische Anregungseinrichtungen 21 vorhanden sein, die jeweils in mehreren Bereichen 20 Wirbelströme induzieren. Gemäß FIG 4 kann die Messeinrichtung 19 für jeden Bereich 20 des Metallbandes 1 jeweils eine derartige elektromagnetische Anregungseinrichtung 21 aufweisen. Die jeweilige Anregungseinrichtung 21 kann als Anregungsspule ausgebildet sein. Die Anregungseinrichtungen 21 werden mit einem - einheitlichen oder individuell eingestellten - Anregungsstrom IA beaufschlagt. Das Beaufschlagen mit dem Anregungsstrom IA ist in FIG 4 nur für eine der Anregungseinrichtungen 21 dargestellt.

Der Anregungsstrom IA weist eine Anregungsfrequenz auf. Die Anregungsfrequenz liegt meist im Bereich von etlichen kHz, manchmal sogar im einstelligen MHz-Bereich. Durch die Anregungsströme IA werden im Metallband 1 Wirbelströme induziert. Die Wirbelströme wiederum können mittels elektromagnetischer Empfangseinrichtungen 22 erfasst und detektiert werden. Die elektromagnetische Empfangseinrichtungen 22 sind den Bereichen 20 individuell zugeordnet. Für jeden Bereich 20 ist also jeweils mindestens eine elektromagnetische Empfangseinrichtung 22 vorhanden. Die elektromagnetischen Empfangseinrichtungen 22 können als Empfangsspulen ausgebildet sein. Die elektromagnetischen Empfangseinrichtungen 22 liefern erfasste Sensorströme ISi (wobei der Index i wieder für den jeweiligen Bereich 20 steht). Die Größe des jeweiligen Sensorstroms ISi ist für die Stärke des im jeweiligen Bereich des Metallbandes 1 angeregten Wirbelstroms charakteristisch. Aus dem Verhältnis des jeweiligen Sensorstroms ISi zum - gegebenenfalls jeweiligen - Anregungsstrom IA kann damit in an sich bekannter Art und Weise der jeweils aktuelle Abstand des jeweiligen Bereichs 20 des Metallbandes 1 von der Messeinrichtung 19 ermittelt werden. Die zeitliche Entwicklung dieses Abstands liefert die Amplitude Ai der mechanischen Schwingung des jeweiligen Bereichs 20 des Metallbandes 1. Aus den Amplituden Ai kann sodann, wie bereits erläutert, auf die Planheit des Metallbandes 1 geschlossen werden.

Zur Ermittlung der Abstände der Bereiche 20 kann es erforderlich sein, allgemein für alle Bereiche 20 oder spezifisch für den jeweiligen Bereich 20 eine Sensitivität zu ermitteln, also einen Faktor, mittels dessen aus dem Verhältnis des jeweiligen Sensorstroms ISi zum Anregungsstrom IA der Abstand ermittelt werden kann. Die Ermittlung einer derartigen Sensitivität kann im Rahmen von Versuchen erfolgen.

Es ist möglich, dass die Messanordnung 9 - insbesondere die Messeinrichtung 19 - die rauen Betriebsbedingungen, insbesondere die hohe Temperaturbelastung durch das heiße Metallband 1, ohne aktive Kühlung verkraftet. Meist ist die Messeinrichtung 19 jedoch wassergekühlt. Dies ist aus FIG 4 dadurch ersichtlich, dass der Messeinrichtung 19 (relativ kaltes) Kühlwasser 23 zugeführt wird und das Kühlwasser 23 (nach dem Kühlen der Messeinrichtung 19) wieder aus der Messeinrichtung 19 abgeführt wird.

In aller Regel ist ein Abstand a der Messeinrichtung 19 vom Metallband 1 einstellbar. Der Abstand a ist auf den nicht ausgelenkten Zustand des Metallbandes 1 bezogen. Beispielsweise kann innerhalb der Messanordnung 9 die Messeinrichtung 19 bewegbar angeordnet sein oder kann die Messanordnung 9 als Ganzes bewegt werden. Der Abstand a ist zwischen einem minimalen Abstand (beispielsweise vollständig ausgefahren) und einem maximalen Abstand (beispielsweise vollständig zurückgezogen) einstellbar. Bei dem minimalen Abstand kann die Messeinrichtung 19 dauerhaft betrieben werden, sofern die Wasserkühlung arbeitet. Das Arbeiten der Wasserkühlung kann beispielsweise überwacht werden. Wenn die Wasserkühlung hingegen nicht arbeitet - beispielsweise, weil sie ausfällt - würde ein weiterer Betrieb der Messeinrichtung 19 oder in manchen Fällen sogar überhaupt ein Verbleib der Messeinrichtung 19 bei dem minimalen Abstand in vielen Fällen sehr schnell zu Schäden der Messeinrichtung 19 führen. Daher wird, wenn die Wasserkühlung nicht arbeitet, die Messeinrichtung 19 zurückgezogen, vorzugsweise auf den maximalen Abstand. Bei dem maximalen Abstand wird die Messeinrichtung 19 trotz der thermischen Einwirkung des heißen Metallbandes 1 zumindest nicht beschädigt. Im Betrieb liegt der Abstand a der Messeinrichtung 19 von dem Metallband 1 (der im wesentlichen mit dem minimalen Abstand übereinstimmt) meist im Bereich von wenigen mm, beispielsweise zwischen 2 mm und 5 mm.

Der maximale Abstand kann erheblich größer als der minimale Abstand sein. In manchen Fällen sind aufgrund des größeren Abstandes die nunmehr kleineren Sensorströme ISi so klein, dass eine sinnvolle Auswertung der Sensorströme ISi und damit die Ermittlung der mechanischen Schwingungsamplituden Ai der Bereiche 20 des Metallbandes 1 nicht mehr möglich ist. In manchen Fällen kann aber trotz des maximalen Abstandes immer noch ein Weiterbetrieb der Messeinrichtung 19 (einschließlich darauf aufbauender Ermittlung der mechanischen Schwingungsamplituden Ai der Bereiche 20 des Metallbandes 1 möglich sein.

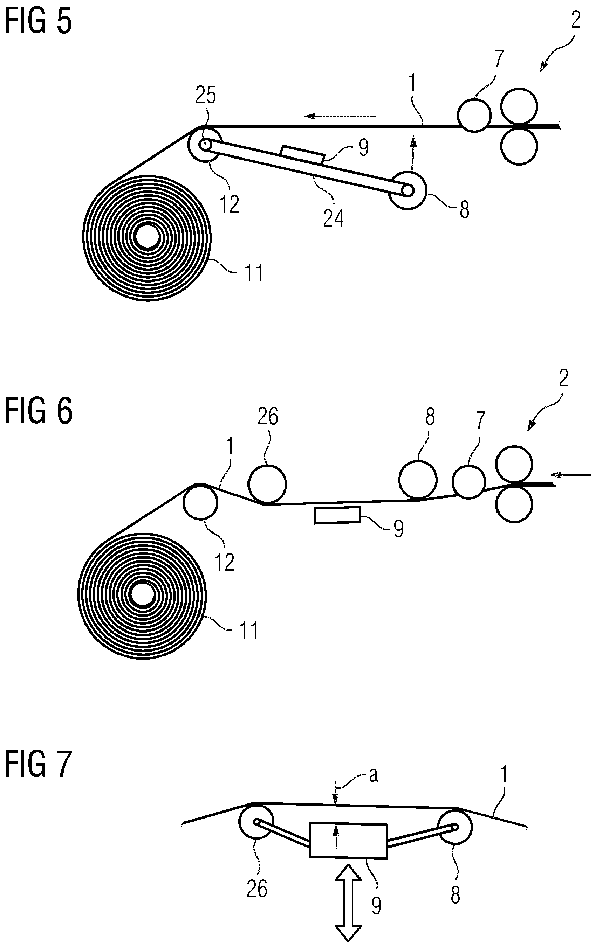

In der Ausgestaltung gemäß den FIG 1 und 2 ist die vordere Umlenkrolle 8 oberhalb des Metallbandes 1 angeordnet, während die Messanordnung 9 unterhalb des Metallbandes 1 angeordnet ist. In diesem Fall, wenn also die vordere Umlenkrolle 8 und die Messanordnung 9 auf voneinander verschiedenen Seiten des Metallbandes 1 angeordnet sind, ist die vordere Umlenkrolle 8 in der Regel eine von der Messanordnung 9 eigenständige Einrichtung. Falls jedoch die vordere Umlenkrolle 8 und die Messanordnung 9 sich auf derselben Seite des Metallbandes 1 befinden, kann es entsprechend der Darstellung in FIG 5 sinnvoll sein, die vordere Umlenkrolle 8 mit der Messanordnung 9 mechanisch zu verbinden, so dass die Messanordnung 9 und die vordere Umlenkrolle 8 nur gemeinsam bewegbar sind. Beispielsweise kann die vordere Umlenkrolle 8 mit der Messanordnung 9 über einen Hebelarm 24 verbunden sein, der in einem Lagerpunkt 25 schwenkbar gelagert ist. Bei geeigneter Wahl des Lagerpunktes 25 kann dadurch erreicht werden, dass beim Schwenken des Hebelarms 24 ein Abstand der Messanordnung 9 vom Metallband 1 konstant bleibt. Der Lagerpunkt 25 kann beispielsweise mit der Drehachse der hinteren Umlenkrolle 12 zusammenfallen bzw. in der unmittelbaren Nähe dieser Drehachse liegen.

Die Bedingung, dass der Abstand der Messanordnung 9 vom Metallband 1 konstant bleibt, ist selbstverständlich nur dann erfüllt, wenn die vordere Umlenkrolle 8 an das Metallband 1 angestellt ist. Wenn die vordere Umlenkrolle 8 von dem Metallband 1 beabstandet ist, variiert mit dem Abstand der vorderen Umlenkrolle 8 von dem Metallband 1 und damit auch der Abstand der Messanordnung 9 vom Metallband 1.

Weiterhin ist es entsprechend der Darstellung in FIG 6 möglich, dass zwischen der Messanordnung 9 und der hinteren Umlenkrolle 12 eine mittlere Umlenkrolle 26 angeordnet ist. Durch diese Ausgestaltung kann die wirksame Länge, auf der das Metallband 1 zu der mechanischen Schwingung angeregt werden kann, besonders kurz gehalten werden. Weiterhin kann dadurch die Richtung, in welcher das Metallband 1 zwischen der vorderen und der mittleren Umlenkrolle 8, 26 gefördert wird, unabhängig vom Abstand a des Metallbandes 1 von der Messanordnung 9 eingestellt werden.

Die mittlere Umlenkrolle 26 kann, wie in FIG 7 dargestellt mit der Messanordnung 9 mechanisch verbunden sein, so dass die Messanordnung 9 und die mittlere Umlenkrolle 26 nur gemeinsam bewegbar sind. Besonders vorteilhaft ist diese Ausgestaltung, wenn entsprechend der Darstellung in FIG 7 zusätzlich zu der mittleren Umlenkrolle 26 auch die vordere Umlenkrolle 8 mit der Messanordnung 9 mechanisch verbunden ist, also eine konstruktive Einheit bilden. In diesem Fall kann beim Anhaspeln des Metallbandes 1 die konstruktive Einheit von Messanordnung 9, vorderer Umlenkrolle 8 und mittlerer Umlenkrolle 26 in einer zurückgezogenen Stellung gehalten werden, so dass ein problemloses Anhaspeln des Metallbandes 1 möglich ist. Nach dem Anhaspeln wird die konstruktive Einheit dann ausgefahren, so dass die vordere Umlenkrolle 8 und die mittlere Umlenkrolle 26 das Metallband 1 auslenken. Aufgrund der Zusammenfassung von Messanordnung 9, vorderer Umlenkrolle 8 und mittlerer Umlenkrolle 26 zu der konstruktiven Einheit ist somit zwangsweise und automatisch auch der Abstand der Messanordnung 9 vom Metallband 1 eingestellt.

Die vorliegende Erfindung weist viele Vorteile auf. Insbesondere wird auf einfache und zuverlässige Weise während des Haspelns des heißen Metallbandes 1 aus Aluminium die Erfassung von Messwerten ermöglicht, anhand derer die Planheit des heißen Metallbandes ermittelt werden kann.

Bezugszeichenliste

1    Metallband
2    Walzgerüst
3    Arbeitswalzen

| 4 | Zwischenwalzen |
|---|---|
| 5 | Stützwalzen |
| 6 | Dickenmesseinrichtung |
| 7 | Trimmeinrichtung |
| 8 | vordere Umlenkrolle |
| 9 | Messanordnung |
| 10 | Haspeleinrichtung |
| 11 | Haspel |
| 12 | hintere Umlenkrolle |
| 13 | Verbindungslinie |
| 14 | mechanische Anregungseinrichtung |
| 15 | Sauggebläse |
| 16 | Saugöffnungen |
| 17 | Saugkanal |
| 18 | Modulatorelement |
| 19 | Messeinrichtung |
| 20 | Bereiche |
| 21 | elektromagnetische Anregungseinrichtungen |
| 22 | elektromagnetische Empfangseinrichtungen |
| 23 | Kühlwasser |
| 24 | Hebelarm |
| 25 | Lagerpunkt |
| 26 | mittlere Umlenkrolle |
| a | Abstand |
| Ai | Amplituden |
| b | Breite |
| IA | Anregungsströme |
| ISi | Sensorströme |
| x | Förderrichtung |

**Patentansprüche**

1.  Walzeinrichtung für ein Metallband (1),

    - wobei die Walzeinrichtung ein Walzgerüst (2) aufweist,
    - wobei die Walzeinrichtung eine auslaufseitig des Walzgerüsts (2) angeordnete Haspeleinrichtung (10) mit einem Haspel (11) und einer hinteren Umlenkrolle (12) aufweist,
    - wobei die hintere Umlenkrolle (12) zwischen dem Walzgerüst (2) und dem Haspel (11) angeordnet ist,
    - wobei die Walzeinrichtung eine zwischen dem Walzgerüst (2) und der hinteren Umlenkrolle (12) angeordnete Messanordnung (9) aufweist,
    - wobei die Messanordnung (9) eine mechanische Anregungseinrichtung (14) aufweist, mittels derer das Metallband (1) in seiner Dickenrichtung zu einer mechanischen Schwingung anregbar ist,
    - wobei die Messanordnung (9) eine Messeinrichtung (19) aufweist, mittels derer für mehrere in Breitenrichtung des Metallbandes (1) nebeneinanderliegende Bereiche (20) des Metallbandes (1) die Amplitude der angeregten mechanischen Schwingung des jeweiligen Bereichs (20) des Metallbandes (1) erfassbar ist,
    **dadurch gekennzeichnet,**
    - dass die Walzeinrichtung eine auslaufseitig des Walzgerüsts (2) angeordnete Trimmeinrichtung (7) aufweist, mittels derer auf beiden Seiten des Metallbandes (1) jeweils ein Streifen des Metallbandes (1) abtrennbar ist, so dass nur ein verbleibender Mittelbereich des Metallbandes (1) der hinteren Umlenkrolle (12) und von dort dem Haspel (11) zugeführt wird, und
    - dass die Walzeinrichtung eine zwischen der Trimmeinrichtung (7) und der Messanordnung (9) angeordnete vordere Umlenkrolle (8) aufweist, mittels derer das Metallband (1) aus einer direkten Verbindungslinie (13) zwischen dem Walzgerüst (2) und der hinteren Umlenkrolle (12) auslenkbar ist.

2.  Walzeinrichtung nach Anspruch 1,
    **dadurch gekennzeichnet,**

**dass** die mechanische Anregungseinrichtung (14) als Saugeinrichtung ausgebildet ist, mittels derer das Metallband (1) einseitig periodisch mit einem Unterdruck beaufschlagbar ist.

3. Walzeinrichtung nach Anspruch 1 oder 2,
   **dadurch gekennzeichnet,**
   **dass** die Messeinrichtung (19) als kontaktlos arbeitende Messeinrichtung ausgebildet ist, mittels derer die Amplitude der angeregten mechanischen Schwingung des jeweiligen Bereichs (20) des Metallbandes (1) kontaktlos erfassbar ist.

4. Walzeinrichtung nach Anspruch 3,
   **dadurch gekennzeichnet,**
   **dass** die Messeinrichtung (19) zum Induzieren von Wirbelströmen in dem Metallband (1) eine Anzahl von elektromagnetischen Anregungseinrichtungen (21) aufweist und für die Erfassung der Amplitude der mechanischen Schwingung des jeweiligen Bereichs (20) des Metallbandes (1) jeweils mindestens eine elektromagnetische Empfangseinrichtung (22) aufweist, mittels derer die Stärke des im jeweiligen Bereich (20) des Metallbandes (1) angeregten Wirbelstroms erfassbar ist.

5. Walzeinrichtung nach einem der obigen Ansprüche,
   **dadurch gekennzeichnet,**
   **dass** die vordere Umlenkrolle (8) im wesentlichen orthogonal zu der direkten Verbindungslinie (13) des Walzgerüsts (2) und der hinteren Umlenkrolle (12) in Dickenrichtung des Metallbandes (1) bewegbar ist.

6. Walzeinrichtung nach einem der obigen Ansprüche,
   **dadurch gekennzeichnet,**
   **dass** die vordere Umlenkrolle (8) von oben an das Metallband (1) anstellbar ist.

7. Walzeinrichtung nach einem der obigen Ansprüche,
   **dadurch gekennzeichnet,**
   **dass** die vordere Umlenkrolle (8) mit der Messanordnung (9) mechanisch verbunden ist, so dass die vordere Umlenkrolle (8)unddie Messanordnung (9) nur gemeinsam bewegbar sind, und dass die vordere Umlenkrolle (8) und die Messanordnung (9) sich auf derselben Seite des Metallbandes (1) befinden.

8. Walzeinrichtung nach Anspruch 7,
   **dadurch g**e**kennzeichnet**,
   dass die vordere Umlenkrolle (8) mit der Messanordnung (9) über einen schwenkbar gelagerten Hebelarm (24) verbunden ist, so dass bei an das Metallband (1) angestellter vorderer Umlenkrolle (8) beim Schwenken des Hebelarms (24) ein Abstand der Messanordnung (9) vom Metallband (1) konstant bleibt.

9. Walzeinrichtung nach einem der obigen Ansprüche,
   **dadurch gekennzeichnet,**
   **dass** zwischen der Messanordnung (9) und der hinteren Umlenkrolle (12) eine mittlere Umlenkrolle (26) angeordnet ist.

10. Walzeinrichtung nach Anspruch 8,
    **dadurch gekennzeichnet,**
    **dass** die mittlere Umlenkrolle (26) mit der Messanordnung (9) mechanisch verbunden ist, so dass die mittlere Umlenkrolle (26) und die Messanordnung (9) nur gemeinsam bewegbar sind.

11. Walzeinrichtung nach einem der obigen Ansprüche,
    **dadurch gekennzeichnet,**
    **dass** die Messeinrichtung (19) wassergekühlt ist.

12. Walzeinrichtung nach einem der obigen Ansprüche,
    **dadurch gekennzeichnet,**
    **dass** ein Abstand (a) der Messeinrichtung (19) vom Metallband (1) zwischen einem minimalen Abstand und einem maximalen Abstand einstellbar ist.

13. Walzeinrichtung nach Anspruch 11 und 12,

**dadurch gekennzeichnet,**

**dass** die Wasserkühlung, der minimale Abstand und der maximale Abstand derart aufeinander abgestimmt sind, dass die Messeinrichtung (19) bei dem minimalen Abstand mit Wasserkühlung dauerhaft betreibbar ist und bei dem maximalen Abstand auch ohne Wasserkühlung dauerhaft betreibbar ist oder zumindest nicht durch die thermische Einwirkung des heißen Metallbandes (1) auf die Messeinrichtung (19) beschädigt wird.

# FIG 1

# FIG 2

# FIG 3

# FIG 4

FIG 5

FIG 6

FIG 7

EP 4 032 629 A1

Europäisches Patentamt
European Patent Office
Office européen des brevets

# EUROPÄISCHER RECHERCHENBERICHT

Nummer der Anmeldung

EP 21 15 3138

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A,D | WO 98/38482 A1 (SIEMENS AG [DE]; BERGHS ANDRE [DE] ET AL.) 3. September 1998 (1998-09-03) * Ansprüche 1-13; Abbildung 1 * ----- | 1-13 | INV. B21B38/02 G01B7/34 |
| A | DE 197 25 726 A1 (BWG BERGWERK WALZWERK [DE]) 28. Januar 1999 (1999-01-28) * Ansprüche 1-18; Abbildungen 1-2 * ----- | 1-13 | |
| A | WO 2010/049209 A1 (SIEMENS AG [DE]; SCHMITT KLAUS [DE]; BREITER MAX-ROBERTO [DE]) 6. Mai 2010 (2010-05-06) * Ansprüche 1-3,12-14; Abbildungen 1-6 * ----- | 1-13 | |
| A | US 2002/080851 A1 (FAURE JEAN-PAUL [FR] ET AL) 27. Juni 2002 (2002-06-27) * Ansprüche 1-3; Abbildungen 1-6 * ----- | 1,11 | |

RECHERCHIERTE SACHGEBIETE (IPC)

B21B
G01B

Der vorliegende Recherchenbericht wurde für alle Patentansprüche erstellt

| Recherchenort | Abschlußdatum der Recherche | Prüfer |
|---|---|---|
| München | 15. Juni 2021 | Forciniti, Marco |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 21 15 3138

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

15-06-2021

| Im Recherchenbericht angeführtes Patentdokument | Datum der Veröffentlichung | Mitglied(er) der Patentfamilie | Datum der Veröffentlichung |
|---|---|---|---|
| WO 9838482 A1 | 03-09-1998 | AT 265674 T<br>EP 0977978 A1<br>US 6289750 B1<br>WO 9838482 A1 | 15-05-2004<br>09-02-2000<br>18-09-2001<br>03-09-1998 |
| DE 19725726 A1 | 28-01-1999 | KEINE | |
| WO 2010049209 A1 | 06-05-2010 | CN 102223959 A<br>EP 2344286 A1<br>PL 2344286 T3<br>WO 2010049209 A1 | 19-10-2011<br>20-07-2011<br>30-04-2014<br>06-05-2010 |
| US 2002080851 A1 | 27-06-2002 | AT 443845 T<br>CN 1349863 A<br>EP 1199543 A1<br>ES 2331723 T3<br>FR 2815705 A1<br>KR 20020034872 A<br>US 2002080851 A1 | 15-10-2009<br>22-05-2002<br>24-04-2002<br>14-01-2010<br>26-04-2002<br>09-05-2002<br>27-06-2002 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9838482 A1